(19) Europäisches Patentamt
European Patent Office
Office européen des brevets

(11) Veröffentlichungsnummer: **0 438 695 B1**

# (12) EUROPÄISCHE PATENTSCHRIFT

(45) Veröffentlichungstag der Patentschrift: **20.09.95**

(51) Int. Cl.[6]: **C08G 18/50**, C08G 18/66, C08G 65/32, C08G 18/10, C08G 18/79, C08G 18/80, //(C08G18/50,101:00)

(21) Anmeldenummer: **90123847.7**

(22) Anmeldetag: **11.12.90**

(54) **Verfahren zur Herstellung von elastischen, kompakten oder zelligen Formkörpern auf der Grundlage von N-Benzylharnstoffgruppen gebunden enthaltenden Elastomeren, derartige Elastomere und hierfür geeignete N-Benzyl-polyoxyalkylen-polyamine.**

(30) Priorität: **02.01.90 DE 4000013**

(43) Veröffentlichungstag der Anmeldung:
**31.07.91 Patentblatt 91/31**

(45) Bekanntmachung des Hinweises auf die Patenterteilung:
**20.09.95 Patentblatt 95/38**

(84) Benannte Vertragsstaaten:
**AT BE CH DE DK ES FR GB IT LI NL SE**

(56) Entgegenhaltungen:
**EP-A- 0 322 089**
**EP-A- 0 352 568**

(73) Patentinhaber: **BASF Aktiengesellschaft**
**Carl-Bosch-Strasse 38**
**D-67063 Ludwigshafen (DE)**

(72) Erfinder: **Becker, Johannes, Dr.**
**Ruedigerstrasse 124**
**W-6700 Ludwigshafen (DE)**
Erfinder: **Matzke, Guenter, Dr.**
**Oberdorfstrasse 5**
**W-6900 Heidelberg (DE)**
Erfinder: **Schmidt, Hans Ulrich**
**Odenwaldstrasse 25H**
**W-6103 Griesheim (DE)**
Erfinder: **Schoenleben, Willibald, Dr.**
**Blumenthalstrasse 41**
**W-6900 Heidelberg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Gegenstand der Erfindung sind ein Verfahren zur Herstellung von elastischen, kompakten oder zelligen Formkörpern auf der Grundlage von N-Benzylharnstoffgruppen gebunden enthaltenden Elastomeren durch Umsetzung von organischen, gegebenenfalls modifizierten Polyisocyanaten mit N-Benzyl-polyoxyalkylen-polyaminen oder Mischungen aus N-Benzyl-polyoxyalkylen-polyaminen und Polyoxyalkylen-polyaminen mit mindestens zwei primären Aminogruppen und niedermolekularen alkylsubstituierten aromatischen Polyaminen, zweckmäßigerweise mit Hilfe der RIM-Technik und hierfür verwendbare N-Benzyl-polyoxyalkylen-polyamine oder Mischungen dieser N-Benzyl-polyoxyalkylen-polyamine und Polyoxyalkylen-polyaminen mit mindestens zwei primären Aminogruppen sowie derartige N-Benzylharnstoffgruppen gebunden enthaltende Elastomere.

Die Herstellung von Urethangruppen, Harnstoffgruppen und Urethan- und Harnstoffgruppen gebunden enthaltenden Elastomeren und Verfahren zur Herstellung von elastischen, kompakten oder zelligen Formkörpern aus derartigen Elastomeren mit Hilfe der RIM-Technik (reaction injection moulding) sind aus zahlreichen Literatur- und Patentpublikationen bekannt.

Nach Angaben der DE-B-2622951 (US 4 218 543) können gegebenenfalls zellige, elastische Formkörper mit einer geschlossenen Oberflächenschicht aus Polyurethan-Polyharnstoff-Elastomeren nach dem Prinzip der Reaktionsspritzgußtechnik hergestellt werden. Die hierfür geeigneten Formulierungen bestehen im wesentlichen aus organischen Polyisocyanaten, Polyolen, reaktiven aromatischen Di- bzw. Polyaminen, die in o-Stellung zur Aminogruppe durch Alkylgruppen substituiert sind und starken Katalysatoren für die Reaktion zwischen Hydroxyl- und Isocyanatgruppen. Wesentlich hierbei ist, daß die aromatischen Di- bzw. Polyamine in jedem Verhältnis mit Polyolen des Molekulargewichts 12000 bis 1800 mischbar sind, die Alkylsubstituenten 1 bis 3 Kohlenstoffatome aufweisen, wobei mindestens zwei der Alkylsubstituenten 2 bis 3 Kohlenstoffatome besitzen und jede der o-Stellungen zu den Aminogruppen substituiert ist. Derartige Systeme besitzen Startzeiten bis herab zu weniger als einer Sekunde; der Übergang der flüssigen in die feste Phase erfolgt nahezu schlagartig, was dazu führt, daß das flüssige Reaktionsgemisch in der Form an deren Wandungen gleichsam erstarrt.

Es ist ferner bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE-C-12 16 538 (GB-PS 981 935) 3,3'-Dichlor-4,4'-diamino-diphenylmethan, 3,3'-Dinitro-4,4'-diamino-diphenylmethan und 3,3'-Dichlor-4,4'-diamino-diphenyl, deren Verarbeitung aus Bedenken hinsichtlich einer gesundheitsschädlichen Wirkung aufwendige und erschwerende Auflagen erfordert. Durch die stark elektronegativen Substituenten dieser Verbindungen wird jedoch die Reaktivität der aromatisch gebundenen Aminogruppen so stark herabgesetzt, daß die Durchhärtung bei nach der Reaktionsspritzgußtechnik hergestellten Formkörpern bis zu 15 Minuten erfordert und damit unwirtschaftlich wird.

Polyurethan-Polyharnstoff-Formulierungen mit im Vergleich zu Systemen gemäß DE-B 26 22 951 etwas verminderter Reaktivität werden nach Angaben der EP-A 026 915 erhalten, wenn man als aromatische Diamine 3,3',5,5'-tetraalkylsubstituierte 4,4'-Diamino-diphenylmethane verwendet, in denen die Alkylreste gleich oder verschieden sind und einen Methyl-, Ethyl-, Isopropyl-, sek.- oder tert.-Butylrest bedeuten, wobei mindestens einer der Substituenten ein Isopropyl- oder sek.-Butylrest sein muß. Die beschriebenen tetraalkylsubstituierten Diamino-diphenylmethane sind mit den Polyolen in den erforderlichen Mengen bei Raumtemperatur sehr gut mischbar und zeigen nur eine geringe oder gar keine Kristallisationsneigung, so daß die Formulierungen unter den für konventionelle RIM-Systeme üblichen Bedingungen gut handhabbar sind. Es zeigte sich jedoch auch, daß die beschriebenen tetraalkylsubstituierten 4,4'-Diamino-diphenylmethane für spezielle Anwendungen zu wenig reaktiv sein können.

Im Vergleich zu EP-A 026 915 etwas reaktivere Polyurethan-Polyharnstoff-Formulierungen werden in der EP-A 069 286 beschrieben. Als aromatische Diamine verwendet werden trialkylsubstituierte meta-Phenylendiamine, wobei zwei der Alkylsubstituenten gleich oder verschieden und lineare oder verzweigte Alkylreste mit 1 bis 4 C-Atomen sind und der 3. Alkylrest 4 bis 12 C-Atome aufweist oder ein fünf- oder sechsgliedriger Cycloalkylrest ist. Die Formulierungen weisen selbst bei einem relativ hohen Gehalt an Diaminen eine ausreichende Fließfähigkeit auf und ergeben Formkörper mit einer hohen Wärmeformbeständigkeit, die keinen progressiven Abfall der Schubmodulkurven zwischen 100 und 200 °C zeigen.

Diese Verfahren weisen alle den Nachteil auf, daß der Reaktivitätsunterschied bei der Addition an Isocyanatgruppen zwischen den höhermolekularen Verbindungen mit mindestens zwei primären Hydroxylgruppen und den aromatischen Diaminen, trotz sterischer Behinderung der Aminogruppen beträchtlich ist und nur durch die Verwendung von synergistisch wirksamen Katalysatorkombinationen aus tertiären Aminen und Metallsalzen, z.B. Dibutylzinndilaurat, zur Beschleunigung der Hydroxyl-Isocyanat-Polyadditionsreaktion

überwunden werden kann. Mit Metallsalzkatalysatoren hergestellte Polyurethan-Polyharnstoff-Elastomere depolymerisieren jedoch bei Temperaturen über 150 °C, wobei eine länger anhaltende Hochtemperatureinwirkung zur völligen Zerstörung der mechanischen Eigenschaften des Materials führen kann.

Bekannt ist ferner die teilweise oder ausschließliche Verwendung von Polyoxyalkylen-polyaminen mit Molekulargewichten von 1100 bis 16000 zur Herstellung von elastischen Polyurethan-Polyharnstoff- oder Polyharnstoff-Elastomeren z.B. aus den EP-A-033 498 (US 4 269 945), EP-A-81 701, EP-A-93 861 (US 4 396 729), EP-A-92 672, EP-A-93 862 (US 4 444 910 und US 4 433 067), EP-A-93 334 und EP-A-93 336.

Nach Angaben der beispielsweise genannten EP-A-81 701 können höhermolekulare Polyoxyalkylen-polyamine mit an aliphatische oder aromatische Reste gebundenen Aminogruppen verwendet werden. Aliphatische Polyoxyalkylen-polyamine sind jedoch bekanntermaßen äußerst reaktiv, so daß die Verarbeitung von RIM-Formulierungen auf dieser Grundlage, z.B. aufgrund kurzer Schußzeiten und dadurch bedingtem geringem Materialaustrag, maschinentechnisch, insbesondere bei der Fertigung von voluminösen Formkörpern, zu erheblichen Problemen führen kann. Etwas langsamer als aliphatische Polyoxyalkylen-polyamine reagieren die Polyoxyalkylenpolyamine mit aromatisch gebundenen Aminogruppen. Nachteilig an diesen Verbindungen ist die kostspielige Herstellung in mehrstufigen Verfahren sowie insbesondere deren relativ hohe Viskosität, beispielsweise von mehr als 20 000 mPas bei 25 °C, die bei der Verarbeitung von Verstärkungsmittel enthaltenden Formulierungen große Schwierigkeiten bereiten kann.

Nach Angaben der EP-A-0 298 359 können Elastomere, die N-Alkylharnstoffeinheiten oder N-Alkylharnstoff- und Urethaneinheiten gebunden enthalten, hergestellt werden durch Umsetzung von Polyisocyanaten mit Kettenverlängerungsmitteln und N-Alkyl-polyoxyalkylen-polyaminen mit 2 bis 12 Kohlenstoffatomen in der Alkylgruppe. Formulierungen aus diesen Aufbaukomponenten können auch nach der RIM-Technik zu Formkörpern verarbeitet werden. Nachteilig an diesen N-Alkyl-polyoxyalkylen-polyaminen ist jedoch, daß die erhaltenen Reaktionsmischungen wegen der hohen Aminreaktivität nur schlecht fließfähig sind und dadurch große Formvolumen, insbesondere wenn die Formwerkzeuggeometrie enge Querschnitte aufweist, nur unzureichend gefüllt werden können.

Bekannt ist ferner die Verwendung von Isocyanatgruppen enthaltenden Prepolymeren und Quasiprepolymeren mit NCO-Gehalten zwischen 9 und 31 Gew.%, die unter Verwendung von gegebenenfalls modifiziertem 4,4'-Diphenylmethan-diisocyanat hergestellt wurden, aus den US-Patent-Schriften 4 048 105, 4 102 833 und 4 374 210 in Polyurethan-Systemen.

Durch die Auswahl geeigneter höhermolekularer Verbindungen mit mindestens zwei reaktiven Wasserstoffatomen, wie z.B. Polyether- und/oder Polyesterpolyolen, Polyoxyalkylen-polyaminen mit an aliphatische oder aromatische Reste gebundenen primären Aminogruppen, oder insbesondere entsprechend substituierter aromatischer primärer Diamine als Kettenverlängerungsmittel sowie von speziellen Katalysatoren oder Katalysatorsystemen versuchte man die RIM-Formulierungen den gegebenen Erfordernissen, wie z.B. Volumen und Geometrie des Formwerkzeugs, anzupassen. Nachteilig an dieser Methode ist jedoch, daß durch die eingesetzten Ausgangsverbindungen nicht nur die Reaktivität der RIM-Formulierungen, sondern auch die mechanischen Eigenschaften der erhaltenen Formkörper beeinflußt werden, so daß Formkörper mit bestimmten Raumformen und größeren Abmessungen teilweise nicht oder nur mit verminderten mechanischen Eigenschaften hergestellt werden können, da die Reaktionsmischungen beispielsweise nicht ausreichend fließfähig sind oder in den erforderlichen Mengen nicht in das Formwerkzeug eingebracht werden können.

Die Aufgabe der vorliegenden Erfindung bestand darin, Reaktionsmischungen mit verbesserten Fließeigenschaften und einem ähnlich guten Durchzugsverhalten im Vergleich zu bereits bekannten Polyharnstoffsystemen zu entwickeln, so daß einerseits voluminöse Formwerkzeuge mit diffizilen Raumformen problemlos gefüllt werden können und andererseits kurze Formstandzeiten, aufgrund der raschen Durchhärtung des Formteils, realisierbar sind. Außerdem sollten die neuen Elastomeren in ihren mechanischen und thermischen Eigenschaften vergleichbar sein mit bekannten Polyharnstoffgruppen enthaltenden Elastomeren, insbesondere jedoch verbesserte Dehnungseigenschaften und eine erhöhte Weiterreißfestigkeit aufweisen.

Diese Aufgabe konnte überraschenderweise gelöst werden durch die Verwendung von N-Benzyl-polyoxyalkylen-polyaminen als höhermolekulare Verbindung mit reaktiven Wasserstoffatomen, wobei diese am Benzylrest substituiert sein können und in Form von Mischungen mit Polyoxyalkylenpolyaminen mit mindestens zwei primären Aminogruppen Anwendung finden können.

Gegenstand der Erfindung ist somit ein Verfahren zur Herstellung von elastischen, kompakten oder zelligen Formkörpern auf der Grundlage von N-Benzylharnstoffgruppen gebunden enthaltenden Elastomeren durch Umsetzung von

a) mindesten einem organischen und/oder modifizierten organischen Polyisocyanat, vorzugsweise einem aromatischen Polyisocyanat und/oder einer modifizierten aromatischen Polyisocyanatmischung mit einem NCO-Gehalt von 8 bis 33,6 Gew.-%, bezogen auf das Gewicht der Polyisocyanatmischung, mit

b) mindesten einem sekundären Polyoxyalkylen-polyamin und

c) mindestens einem alkylsubstituierten primären aromatiscflen Polyamin mit einem Molekulargewicht bis 500 in Gegenwart oder Abwesenheit von

d) Katalysatoren sowie gegebenenfalls

e) Treibmitteln,

f) Hilfsmitteln und/oder

g) Zusatzstoffen

das dadurch gekennzeichnet ist, daß man als sekundäre Polyoxyalkylenpolyamine (b) N-Benzyl-polycxyalkylen-polyamine (bi) gegebenenfalls in Mischung mit Polyoxyalkylen-polyaminen mit 2 bis 4 primären Aminogruppen (bii) verwendet. Gegenstände der Erfindung sind ferner spezielle Ausgestaltungen des erfindungsgemäßen Verfahrens nach den Ansprüchen 2 bis 11, wobei vorteilhafterweise als sekundäre Polyoxyalkylen-polyamine (b) Mischungen aus N-Benzyl-polyoxyalkylen-polyaminen und Polyoxyalkylen-polyaminen mit 2 bis 4 primären Aminogruppen eingesetzt werden und die kompakten oder zelligen Formkörper vorzugsweise nach der RIM-Technik in einem geschlossenen temperierten Formwerkzeug hergestellt werden.

Gegenstände der Erfindung sind außerdem die neuen N,N'-Dibenzyl-polyoxyalkylen-diamine mit einem Molekulargewicht von 410 bis 8000 nach Anspruch 12, N,N',N''-Tribenzyl-polyoxyalkylen-triamine mit einem Molekulargewicht von 662 bis 8000 nach Anspruch 13, Mischungen aus den bevorzugt zur Anwendung kommenden N,N'-Dibenzyl-polyoxyalkylen-polyaminen und/oder N,N'N''-Tribenzyl-polyoxyalkylen-triaminen und Polyoxyalkylenpolyaminen mit 2 und/oder 3 primären Aminogruppen nach Anspruch 14 und die N-Benzylharnstoffgruppen gebunden enthaltenden Elastomeren, hergestellt durch Umsetzung von

a) mindesten einem organischen und/oder modifizierten organischen Polyisocyanat mit

b) mindestens einem N-Benzyl-polyoxyalkylen-polyamin oder einer Mischung aus mindestens einem N-Benzyl-polyoxyalkylen-polyamin und mindestens einem Polyoxyalkylen-polyamin mit 2 bis 4 primären Aminogruppen und

c) mindestens einem alkylsubstituierten primären aromatischen Polyamin mit einem Molekulargewicht bis 500 in Gegenwart oder Abwesenheit mindestens eines Katalysators nach Anspruch 15.

Die erfindungsgemäß hergestellten elastischen Formkörper auf der Grundlage von N-Benzylharnstoffgruppen gebunden enthaltenden Elastomeren zeigen eine deutlich verbesserte Reißdehnung, einen niedrigen E-Modul sowie eine erhöhte Wärmeformbeständigkeit. Die erhaltenen Formkörper zeigen erheblich weniger Verarbeitungsfehler, wie z.B. Hammerschlag oder Porosität, und ein trennfreundliches Verhalten, so daß auch größere Formteile bereits nach kurzen Formstandzeiten, vorzugsweise nach 10 bis 30 Sekunden, problemlos entformt werden können. Die erfindungsgemäß verwendbaren, neuen N-Benzyl-polyoxyalkylen-polyamine bilden mit den anderen Ausgangsstoffen sowie gegebenenfalls Katalysatoren, Treibmitteln, Hilfsmitteln und Zusatzstoffen Formulierungen mit verbesserter Fließfähigkeit und verlängerter Gelzeit, so daß die Austragungsmengen mit handelsüblichen Hochdruckspritzgußmaschinen deutlich gesteigert werden und auch großvolumige Formwerkzeuge ohne Schwierigkeiten befüllt werden können.

Zu den zur Herstellung der N-Benzylharnstoffgruppen gebunden enthaltenden Elastomeren verwendbaren Ausgangsstoffen und den hieraus bestehenden Formkörpern ist im einzelnen folgendes auszuführen.

a) Als organische Polyisocyanate kommen die an sich bekannten aliphatischen, cycloaliphatischen und vorzugsweise aromatischen mehrwertigen Isocyanate in Frage. Im einzelnen seien beispielhaft genannt: 1,6-Hexamethylen-diisocyanat, 1-Isocyanato-3,5,5-trimethyl-3-isocyanatomethyl-cyclohexan, 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, Mischungen aus 4,4'-, 2,2'- und 2,4'-Dicyclohexylmethan-diisocyanaten und Polymethylen-polycyclohexylen-polyisocyanaten, 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'-, 2,4'- und 2,2'-Diphenylmethan-diisocyanaten und Polyphenyl-polymethylen-polyisocyanaten(Roh-MDI) und Mischungen aus Roh-MDI und Toluylendiisocyanaten.

Häufig werden auch sogenannte modifizierte mehrwertige Isocyanate, d.h. Produkte, die durch chemische Umsetzung obiger Di- und/oder Polyisocyanate erhalten werden, verwendet. Beispielhaft genannt seien Ester-, Harnstoff-, Biuret-, Allophanat- und vorzugsweise Carbodiimid-, Isocyanurat- und/oder Urethangruppen enthaltende Di- und/oder Polyisocyanate. Im einzelnen kommen beispielsweise in Betracht: Urethangruppen enthaltende aromatische Polyisocyanate mit NCO-Gehalten von 33,6 bis 8 Gew.%, vorzugsweise von 31 bis 21 Gew.%, beispielsweise mit niedermolekularen Diolen, Triolen, Oxyalkylenglykolen, Dioxyalkylenglykolen oder Polyoxyalkylen-glykolen mit Molekulargewichten bis 800 modifiziertes 4,4'-Diphenylmethan-diisocyanat oder Toluylendiisocyanat, wobei als Di- bzw. Polyoxyalkylen-glykole, die einzeln oder als Gemische eingesetzt werden können, beispielsweise genannt seien:

Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 8 Gew.%, vorzugsweise von 21 bis 14 Gew.%. Bewährt haben sich ferner flüssige Carbodiimidgruppen und/oder Isocyanuratringe enthaltende Polyisocyanate mit NCO-Gehalten von 33,6 bis 8 Gew.-%, vorzugsweise 31 bis 21 Gew.%, z.B. auf Basis von 4,4'-, 2,4'- und/oder 2,2'-Diphenylmethan-diisocyanat und/oder 2,4- und/oder 2,6-Toluylen-diisocyanat und vorzugsweise 2,4- und 2,6-Toluylen-diisocyanat sowie die entsprechenden Isomerengemische, 4,4'-, 2,4'- und 2,2'-Diphenylmethan-diisocyanat sowie die entsprechenden Isomerengemische z.B. aus 4,4'- und 2,4'-Diphenylmethan-diisocyanaten, Roh-MDI und Gemische aus Toluylen-diisocyanaten und Roh-MDI.

Insbesondere kommen jedoch zur Anwendung: (i) Carbodiimid- und/oder Urethangruppen enthaltende Polyisocyanate aus 4,4'-Diphenylmethan-diisocyanat oder einer Mischung aus 4,4'- und 2,4'-Diphenylmethan-diisocyanaten mit einem NCO-Gehalt von 33,6 bis 8 Gew.%, (ii) NCO-Gruppen enthaltende Prepolymere mit einem NCO-Gehalt von 8 bis 25 Gew.%, bezogen auf das Prepolymergewicht, hergestellt durch Umsetzung von Polyoxyalkylen-polyolen mit einer Funktionalität von 2 bis 4 und einem Molekulargewicht von 600 bis 6000 mit 4,4'-Diphenylmethan-diisocyanat oder einer Mischung aus 4,4'- und 2,4'-Diphenylmethan-diisocyanaten und Mischungen aus (i) und (ii).

Zur Herstellung der NCO-Gruppen enthaltenden Prepolymeren eignen sich, wie bereits dargelegt wurde, Polyoxyalkylen-polyole mit einer Funktionalität von 2 bis 4, vorzugsweise 2 bis 3 und insbesondere 3 und einem Molekulargewicht von 600 bis 6000, vorzugsweise von 2800 bis 4500. Analoge Polyoxyalkylen-polyole mit Molekulargewichten von ungefähr 220 bis 8 000 werden eingesetzt zur Polyoxyalkylen-polyaminherstellung, den geeigneten Ausgangsstoffen zur Herstellung der N-Benzyl-polyoxyalkylen-polyamine (b). Derartige Polyoxyalkylenpolyole können nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 4, vorzugsweise 2 oder 3 reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin sowie Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan und Pentaerythrit.

Die Polyoxyalkylen-polyole können einzeln oder in Form von Mischungen verwendet werden.

b) Als sekundäre Polyoxyalkylen-polyamine (b) finden erfindungsgemäß N-Benzyl-polyoxyalkylen-polyamine Verwendung. Geeignet sind auch die am Benzylrest substituierten, z. B. mit Fluor-, Chloratomen, Alkyl-, Alkoxy-, Nitrogruppen oder vorzugsweise Amino- oder Carboxylgruppen substituierten N-Benzyl-polyoxyalkylen-polyamine, wobei jedoch bevorzugt die unsubstituierten N-Benzyl-polyoxyalkylen-polyamine eingesetzt werden. In Betracht kommen vorteilhafterweise N-Benzyl-polyoxyalkylen-polyamine mit 2 bis 4, vorzugsweise 2 oder 3 gegebenenfalls am Benzylrest substituierten N-Benzylaminogruppen und einem Molekulargewicht von 410 bis 8000 vorzugsweise von 1600 bis 4500. Insbesondere bevorzugt verwendet werden N,N'-Dibenzyl-polyoxyalkylen-diamine mit einem Molekulargewicht von 410 bis ungefähr 8000, und N,N',N''-Tribenzyl-polyoxyalkylen-triamine mit einem Molekulargewicht von 662 bis ungefähr 8000 oder Mischungen dieser N-Benzyl-polyoxyalkylen-di- und -triamine, wobei die Polyoxyalkylenreste zweckmäßigerweise ausgewählt sind aus der Gruppe der Polyoxyethylen-, Polyoxypropylen-, Polyoxytetramethylen-, Polyoxypropylen-polyoxyethylen-, Polyoxytetramethylen-polyoxypropylen und/oder -polyoxyethylenreste und vorzugsweise Polyoxypropylen- und Polyoxypropylen-polyoxyethylenreste verwendet werden.

Die erfindungsgemäß verwendbaren neuen, gegebenenfalls am Benzylrest substituierten N-Benzyl-polyoxyalkylen-polyamine können beispielsweise hergestellt werden durch Umsetzung der vorgenannten Polyoxyalkylen-polyamine mit 2 bis 4 primären Aminogruppen mit einem am Phenylrest substituierten oder vorzugsweise unsubstituierten Benzaldehyd zu Polyoxyalkylen-di-bis-tetraaldiminen und anschließender Hydrierung der erhaltenen Polyoxyalkylen-polyaldimine zu den erfindungsgemäß verwendbaren N-Benzyl-polyoxyalkylen-polyaminen.

Die zur N-Benzyl-polyoxyalkylen-polyaminherstellung vorzugsweise zur Anwendung kommenden Polyoxyalkylen-polyamine mit an aliphatische Reste gebundenen Aminogruppen können nach bekannten Verfahren, beispielsweise durch Cyanoalkylierung der beschriebenen Polyoxyalkylen-polyole und anschließender Hydrierung des gebildeten Nitrils (US-A-3 267 050) oder durch Aminierung von Polyoxyalkylen-polyolen mit Ammoniak in Gegenwart von Wasserstoff und Katalysatoren (DE-A-12 15 373) hergestellt werden.

Geeignete Polyoxyalkylen-polyamine mit an aromatische Reste gebundenen Aminogruppen können beispielsweise hergestellt werden durch Umsetzung der oben beschriebenen Polyoxyalkylen-polyole mit aromatischen Polyisocyanaten im Verhältnis von NCO-:OH-Gruppen von mindestens 2 und anschließender Hydrolyse der erhaltenen aromatische NCO-Gruppen aufweisenden Prepolymeren zu Polyaminen analog den Verfahren der DE-A-29 48 419, DE-A-30 39 600, EP-A-84 141, EP-A-79 512, EP-A-97 290, EP-A-97 298, EP-A-97 299, EP-A-99 537, EP-A-113 027, EP-A-113 020 oder EP-A-154 768.

Die Polyoxyalkylen-polyamine können als Einzelverbindungen oder in Form von Mischungen aus Produkten mit unterschiedlichen Molekulargewichten und Funktionalitäten verwendet werden. Bei Verwendung von niedermolekularen Polyoxyalkylen-polyolen, z.B. von niedermolekularen Polyoxytetramethylen-glykolen, als Ausgangskomponente ist erforderlich, daß die erhaltenen Polyoxyalkylen-polyamine mit höhermolekularen Polyoxyalkylen-polyaminen in einer solchen Menge gemischt werden, daß das durchschnittliche Molekulargewicht ungefähr 260 bis ungefähr 8 000 bei einer Funktionalität von 2 bis 4 beträgt. Als Polyoxyalkylen-polyamine verwendbar sind ferner Mischungen aus Polyoxyalkylen-polyolen und Polyoxyalkylen-polyaminen und/oder teilweise aminierten Polyoxyalkylen-polyolen mit der Maßgabe, daß mindestens 50 %, vorzugsweise mindestens 64 % und insbesondere mehr als 90 % der reaktiven Endgruppen Aminogruppen sind und diese zweckmäßigerweise zu mindestens 85 %, vorzugsweise zu mehr als 90 % aus primären Aminogruppen bestehen.

Als andere Ausgangskomponente zur Herstellung der Polyoxyalkylen-polyaldimine wird vorzugsweise Benzaldehyd verwendet. Verwendbar sind jedoch auch substituierte Benzaldehyde, wie z. B. mit Fluor- und/oder Chloratomen, Nitro-, Alkyl- und Alkoxygruppen mit 1 bis 12 C-Atomen sowie vorzugsweise Amino- oder Carboxylgruppen substituierter Benzaldehyd.

Zur Herstellung der Polyoxyalkylen-polyaldimine werden die Polyoxyalkylen-polyamine, vorzugsweise die Polyoxyalkylen-di- und/oder -triamine, mit eines gegebenenfalls substituierten Benzaldehyd vorteilhafterweise in einem $-NH_2$/-CHO-Gruppenverhältnis von 1 : 1 bis 5, vorzugsweise 1 : 1,1 bis 4 und insbesondere 1 : 1,1 bis 2 gemischt und zweckmäßigerweise nach Zusatz eines geeigneten Lösungs- oder Verdünnungsmittels, wie z. B. Toluol, Xylol, Benzol, Methylenchlorid, Dichlorethan, Cyclohexan, n-Hexan oder Heptan und gegebenenfalls einer anorganischen oder organischen Säure, wie z. B. Salzsäure, Ameisensäure oder Benzoesäure oder Arylsulfonsäure, wie z. B. p-Toluolsulfonsäure als Katalysator, so lange in Gegenwart eines unter den Reaktionsbedingungen inerten Gases am Wasserabscheider erhitzt, bis die theoretisch zu erwartende oder bei partieller Reaktion, die gewünschte Wassermenge abgetrennt ist. üblicherweise sind hierzu Reaktionszeiten von 1 bis 60, vorzugsweise 5 bis 40 Stunden erforderlich. Derartige Verfahren werden z. B. beschrieben in Houben-Weyl, Methoden der organischen Chemie, Band VII/2b, Teil II, Georg Thieme Verlag, Stuttgart 1976, 4. Auflage, Seiten 1948 ff.

Eine Reinigung der Polyoxyalkylen-polyaldimine vor ihrer Hydrierung, beispielsweise durch Filtration, ist üblicherweise nicht notwendig. Die Polyoxyalkylen-polyaldimine können nach Abdestillieren des überschüssigen, gegebenenfalls substituierten Benzaldehyds und, falls in Gegenwart eines Lösungs- oder Verdünnungsmittels kondensiert wurde und dieses zur nachfolgenden Hydrierung ungeeignet ist, nach Abdestillieren des vorzugsweise eingesetzten Lösungs- oder Verdünnungsmittels direkt zu den erfindungsgemäß verwendbaren N-Benzyl-polyoxyalkylen-polyaminen hydriert werden.

Die Hydrierung der Polyoxyalkylen-polyaldimine kann nach an sich bekannten Methoden, z. B. in Gegenwart von Katalysatoren in Lösung oder vorzugsweise lösungsmittelfrei bei erhöhten Temperaturen drucklos oder vorzugsweise unter Druck durchgeführt werden. Nach einem bevorzugt angewandten Verfahren werden die Polyoxyalkylen-polybenzylimine in Gegenwart von Raney-Nickel lösungsmittelfrei bei einer Temperatur im Bereich von 60 bis 200 °C, vorzugsweise 100 bis 160 °C und einem Druck von 20 bis 500 bar, vorzugsweise 150 bis 230 bar innerhalb eines Zeitraums von 2 bis 50 Stunden,

vorzugsweise 5 bis 18 Stunden hydriert. Das erhaltene Hydriergemisch wird anschließend unter Druck filtriert und die flüchtigen Bestandteile aus dem Filtrat unter vermindertem Druck bei Temperaturen von 100 bis 200 °C abgetrennt. Die erhaltenen N-Benzyl-polyoxyalkylen-polyamine können ohne weitere Reinigung direkt zur Herstellung der N-Benzylharnstoffgruppen gebunden enthaltenen Elastomeren eingesetzt werden.

Nach einer anderen Herstellungsmethode können die Polyoxyalkylen-polyole auch direkt mit Benzylamin in Gegenwart von Katalysatoren und Wasserstoff zu N-Benzyl-polyoxyalkylen-polyaminen aminiert werden.

Anstelle der N-Benzyl-polyoxyalkylen-polyamine (bi) können zur Herstellung der elastischen, kompakten oder zelligen Formkörper auf der Grundlage von N-Benzylharnstoffgruppen gebunden enthaltenden Elastomeren auch Mischungen verwendet werden aus den erfindungsgemäß geeigneten N-Benzyl-polyoxyalkylen-polyaminen (bi) und den oben beschriebenen Polyoxyalkylen-polyaminen (bii). Derartige Mischungen können beispielsweise erhalten werden durch Mischen von vorab hergestellten N-Benzyl-polyoxyalkylen-polyaminen (bi) mit Polyoxyalkylen-polyaminen (bii). Nach einer anderen Verfahrensvariante werden die eingesetzten Polyoxyalkylen-polyamine mit 2 bis 4 primären Aminogruppen mit einer unterschüssigen Menge an gegebenenfalls substituiertem Benzylaldehyd zur Reaktion gebracht, so daß die vorliegenden Aminogruppen nur partiell in Benzaldimingruppen übergeführt werden und die noch primäre Aminogruppen aufweisenden Polyoxyalkylen-polyaldimine werden anschließend in bekannter Weise hydriert.

In Betracht kommen beispielsweise Mischungen aus N-Benzyl-polyoxyalkylen-polyaminen (bi) und Polyoxyalkylen-polyaminen (bii) in solchen Mengen, daß diese aufweisen

10 bis 90 %, vorzugsweise 30 bis 80 % und insbesondere 40 bis 70 % N-Benzylaminogruppen der N-Benzyl-polyoxyalkylen-polyamine und

90 bis 10 %, vorzugsweise 20 bis 70 % und insbesondere 30 bis 60 % primäre Aminogruppen von Polyoxyalkylen-polyaminen mit 2 bis 4, vorzugsweise 2 oder 3 primären Aminogruppen und einem Molekulargewicht von 1100 bis 8000, vorzugsweise von 1600 bis 4500, wobei die Prozente bezogen sind auf die Summe aus N-Benzylamino- und primären Aminogruppen.

Besonders bewährt haben sich und daher vorzugsweise Verwendung finden solche Polyoxyalkylen-polyaminmischungen, die enthalten

10 bis 90 % Benzylaminogruppen von N,N'-Dibenzyl-polyoxyalkylendiaminen, N,N',N''-Tribenzyl-polyoxyalkylen-triaminen oder Mischungen dieser N-Benzyl-polyoxyalkylen-polyamine mit Molekulargewichten von 410 bis 8000 und

10 bis 90 % primäre Aminogruppen von mindestens einem Polyoxyalkylenpolyamin mit 2 und/oder 3 primären Aminogruppen und einem Molekulargewicht von 1100 bis 8000, wobei die Polyoxyalkylenreste ausgewählt sind aus der Gruppe der Polyoxypropylen-polyoxyethylen-, Polyoxytetramethylen- und vorzugsweise Polyoxypropylenreste und die Prozente bezogen sind auf die Summe an N-Benzylamino- und primären Aminogruppen.

(c) Als alkylsubstituierte aromatische Polyamine mit Molekulargewichten bis 500, vorzugsweise von 122 bis 400, werden zweckmäßigerweise primäre aromatische Diamine verwendet, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den N-Benzyl-polyoxyalkylen-polyaminen oder den Mischungen aus N-Benzyl-polyoxyalkylen-polyaminen und Polyoxyalkylen-polyaminen mit primären Aminogruppen (b) unter den Verarbeitungsbedingungen zumindest teilweise, vorzugsweise jedoch vollständig mischbar sind. Bewährt haben sich beispielsweise alkylsubstituierte meta-Phenylendiamine der Formeln

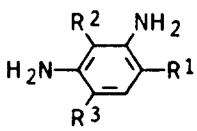 und/oder 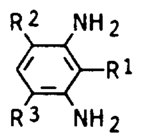 ,

in denen $R^3$ und $R^2$ gleich oder verschieden sind und einen Methyl-, Ethyl-, Propyl- oder Isopropylrest bedeuten und $R^1$ ein linearer oder verzweigter Alkylrest mit 1 bis 10, vorzugsweise 1 bis 6 Kohlenstoffatomen ist. Gut bewährt haben sich auch verzweigte Alkylreste $R^1$ mit 4 bis 6 Kohlenstoffatomen, bei denen die Verzweigungsstelle am $C_1$-Kohlenstoffatom sitzt. Als Reste $R^1$ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl-, Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-,2,4-Dimethyl-6-(1,1-dimethyl-n-propyl)-, 2-(1-Methyl-n-butyl)-4,6-dimethyl-phenylendiamin-1,3. Vorzugsweise verwendet werden 1-Methyl-3,5-diethyl-2,4- und/oder -2,6-phenylendiamine, 2,4-Dimethyl-6-tert.-butyl-, 2,4-Dimethyl-6-isooctyl- und 2,4-Dimethyl-6-cyclohexyl-phenylendiamin-1,3. Geeignet sind ferner 3,3'-di- und/oder 3,3',5,5'-tetra-n-alkylsubstituierte 4,4'-Diamino-diphenylmethane wie z.B. 3,3'-Dimethyl-, 3,3'-Diethyl-, 3,3'-Di-n-propyl-, 3,3',5,5'-Tetramethyl-, 3,3',5,5'-Tetraethyl- und 3,3',5,5'-Tetra-n-propyl-4,4'-diamino-diphenylmethan.

Als alkylsubstituierte 4,4'-Diamino-diphenylmethane finden vorzugsweise solche der Formel

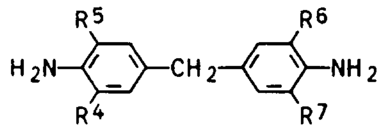

Verwendung, in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln

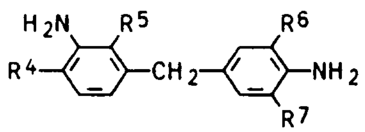

und/oder

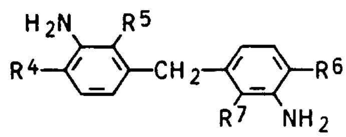

verwendet werden, wobei $R^4$, $R^5$, $R^6$ und $R^7$ die oben genannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5'-Dimethyl-3',5-di-sek.-butyl-, 3,5-Diethyl-3',5'-di-sek.-butyl-4,4'-diamino-diphenylmethan, 3-Methyl-3',5,5'-triisopropyl-, 3-Ethyl-3',5,5'-triisopropyl-, 3-Methyl-3'-ethyl-5,5'-diisopropyl-,3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek.-butyl-4,4'-diamino-diphenylmethan. Vorzugsweise verwendet werden 3,5-Dimethyl-3',5'-diisopropyl- und 3,3',5,5'-Tetraisopropyl-4,4'-diamino-diphenylmethan. Die Diamino-diphenylmethane könnnen einzeln oder in Form von Mischungen eingesetzt werden.

Zur Herstellung der N-Benzylharnstoffgruppen gebunden enthaltenden Elastomeren und Formkörper hieraus werden vorzugsweise die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diamino-diphenylmethanen mit 1 bis 4 C-Atomen im Alkylrest, insbesondere Methyl-, Ethyl- und Isopropylreste gebunden enthaltende 3,3',5,5'-tetralkylsubstituierte 4,4'-Diamino-diphenylmethane sowie Gemische aus den genannten tetraalkylsubstituierten 4,4'-Diamino-diphenylmethanen und DETDA verwendet.

Zur Erzielung spezieller mechanischer Eigenschaften kann es auch zweckmäßig sein, die vorgenannten alkylsubstituierten aromatischen Polyamine (c) in Gemisch mit niedermolekularen mehrwertigen Alkoholen, vorzugsweise zwei- und/oder dreiwertigen Alkoholen oder Etherglykolen zu verwenden. Als derartige mehrwertige Alkohole und Etherglykole seien beispielsweise genannt: Alkandiole mit vorzugsweise 2 bis 6 Kohlenstoffatomen, insbesondere Ethan-, 1,4-Butan- und 1,6-Hexandiol, Glycerin, Trimethylolpropan, Diethylen-, Dipropylen-glykol oder Mischungen aus mindestens zwei der genannten Verbindungen. Nachteilig an dieser Verfahrensweise ist, daß die Reaktion aufgrund der unterschiedlichen Reaktivität der primären und sekundären Aminogruppen und der Hydroxylgruppen einer sorgfältigen Katalyse bedarf. Sofern niedermolekulare mehrwertige Alkohole überhaupt Anwendung finden, hat es

sich als zweckmäßig erwiesen maximal 50 Gew.-%, vorzugsweise weniger als 20 Gew.-%, bezogen auf das Gewicht der alkylsubstituierten aromatischen Polyamine (c) zu verwenden.

Zur Herstellung der erfindungsgemäßen Elastomeren werden die organischen Polyisocyanate und/oder modifizierten Polyisocyanatmischungen (a), sekundären Polyoxyalkylen-polyamine (b) und alkylsubstituierten primären aromatische Polyamine (c) in solchen Mengen zur Reaktion gebracht, daß das Äquivalenz-Verhältnis von NCO-Gruppen der Komponente (a) zur Summe der reaktiven Wasserstoffatome der Komponenten (b) und (c) 0,85 bis 1,25 : 1, vorzugsweise 0,95 bis 1,15 : 1 und insbesondere 0,98 bis 1,10 : 1 beträgt und das Verhältnis von N-Benzylaminogruppen oder der Summe aus N-Benzylaminogruppen und primären Aminogruppen der Komponente (b) zu primären aromatischen Aminogruppen der Komponente (c) 90 : 10 bis 10 : 90, vorzugsweise 40 : 60 bis 15 : 85 ist. Sofern die Reaktionsmischung zusätzlich Hydroxylgruppen enthält, sind diese den Aminogruppen hinsichtlich der Äquivalenzverhältnisse gleich.

Die erfindungsgemäßen N-Benzylharnstoffgruppen gebunden enthaltende Elastomere werden vorzugsweise in Abwesenheit von Katalysatoren hergestellt. Sofern jedoch Katalysatoren Anwendung finden, werden insbesondere stark basische Amine eingesetzt, wobei zur Erzielung von wärmebeständigen Formkörpern, die der on-line-Lackierung unterworfen werden können, die Abwesenheit von synergistisch wirkenden organischen Metallverbindungen z.B. organischen Zinnverbindungen, zwingend erforderlich ist. Als geeignete Katalysatoren seien beispielsweise genannt: Amidine, wie z.B. 2,3-Dimethyl-3,4,5,6-tetrahydropyrimidin und tertiäre Amine, wie z.B. Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetralkylammoniumhydroxide, wie z.B. Tetramethylammoniumhydroxid, Alkalihydroxide, wie z.B. Natriumhydroxid und Alkalialkoholate, wie z.B. Natriummethylat und Kaliumisopropylat sowie Alkalisalze von langkettigen Fettsäuren mit 10 bis 20 C-Atomen und gegebenenfalls seitenständigen OH-Gruppen. Verwendet werden üblicherweise 0,001 bis 5 Gew.%, vorzugsweise 0,05 bis 2 Gew.% Katalysator, bezogen auf das Gewicht der Komponente (b).

Zur Herstellung von elastischen Formkörpern auf Basis der erfindungsgemäßen N-benzylharnstoffgruppenhaltigen Elastomeren können der Reaktionsmischung aus den Komponenten (a) bis (c) sowie gegebenenfalls (d) gegebenenfalls Treibmittel (e) zur Erzielung zelliger Formkörper sowie gegebenenfalls Hilfsmittel (f) und/oder Zusatzstoffe (g) einverleibt werden.

e) Als Treibmittel zur Herstellung von zelligen Formkörpern eignet sich z.B. Wasser, das mit Isocyanatgruppen unter Bildung von Kohlendioxid reagiert. Die Wassermengen, die zweckmäßigerweise verwendet werden können, betragen 0,1 bis 1,0, vorzugsweise 0,2 bis 0,4 Gew.%, bezogen auf das Gewicht der Komponenten (b) und (c).

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan, 1,1,2-Trichlor-1,2,2-trifluorethan, Trifluormethan, Difluormethan, Difluorethan, Tetrafluorethan und Heptafluorpropan, Kohlenwasserstoffe, wie n- und iso-Butan, n- und iso-Pentan sowie die technischen Gemische dieser Kohlenwasserstoffe, Propan, Propylen, Hexan, Heptan, Cyclobutan, Cyclopentan, Cyclohexan, Dialkylether, wie Dimethylether, Diethylether und Furan, Carbonsäureester, wie Methyl-, Ethylformiat und Aceton. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Formkörpern aus N-benzylharnstoffgruppenhaltigen Elastomeren hängt ab von der Dichte, die man erreichen will sowie gegebenenfalls von der Mitverwendung von Wasser. Im allgemeinen liefern Mengen von 1 bis 15 Gew.%, vorzugsweise 2 bis 11 Gew.%, bezogen auf das Gewicht der Komponenten (b) und (c), zufriedenstellende Ergebnisse.

(f) und (g) Als geeignete Hilfsmittel (f) und/oder Zusatzstoffe (g) seien beispielhaft genannt: oberflächenaktive Substanzen, Schaumstabilisatoren, Zellregler, Füllstoffe, Verstärkungsmittel, Flammschutzmittel, äußere und/oder innere Trennmittel, Farbstoffe, Pigmente, Hydrolyseschutzmittel, fungistatisch und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponenten (b) und (c) angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zu Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum und Zeolithe, Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, u. a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit und insbesondere Glasfasern verschiedener Länge, die gegebenenfalls geschlichtet sein können. Als organische Füllstoffe kommen beispielsweise in Betracht: Kohle, Kohlefasern, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyoxyalkylenpolyolen analog den Angaben der deutschen Patentschriften 11 11 394, 12 22 669, (US 3 304 273, 3 383 351, 3 523 093), 11 52 536 (GB 1 040 452) und 11 52 537 (GB 987 618) hergestellt und danach aminiert werden sowie Filler-polyoxyalkylen-polyamine, bei denen wäßrige Polymerdispersionen in Polyoxyalkylen-polyamin-dispersionen übergeführt werden.

Die anorganischen und organischen Füllstoffe können einzeln oder als Gemische verwendet werden. Vorzugsweise Anwendung finden ungeschlichtete oder geschlichtete Kurzglasfasern mit Längen kleiner als 0,4 mm, vorzugsweise kleiner als 0,2 mm.

Die anorganischen und/oder organischen Füllstoffe und/oder Verstärkungsmittel werden der Reaktionsmischung vorteilhafterweise in Mengen von 0,5 bis 35 Gew.%, vorzugsweise 3 bis 20 Gew.%, bezogen auf das Gewicht der Komponenten (a) bis (c), einverleibt.

Geeignete Flammschutzmittel sind beispielsweise Trikresylphosphat, Tris-2-chlorethylphosphat, Trischlorpropylphosphat und Tris-2,3-dibrompropylphosphat.

Außer den bereits genannten halogensubstituierten Phosphaten können auch anorganische Flammschutzmittel, wie z.B. Aluminiumoxidhydrat, Antimontrioxid, Arsenoxid, Ammoniumpolyphosphat und Calciumsulfat oder Melamin oder Mischungen davon zum Flammfestmachen der Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponenten (b) und (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Die elastischen, kompakten Formkörper auf Basis der erfindungsgemäßen N-benzyl-harnstoffgruppenhaltigen Elastomeren werden zweckmäßigerweise nach dem one shot-Verfahren mit Hilfe der Niederdruck-Technik oder insbesondere der Reaktionsspritzguß-Technik (RIM) in offenen oder vorzugsweise geschlossenen Formwerkzeugen, hergestellt. Zur Herstellung der zelligen Formkörper wird die Reaktion insbesondere unter Verdichtung in einem geschlossenen Formwerkzeug durchgeführt. Die Reaktionsspritzguß-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Aufbaukomponenten (b) und

(c) und gegebenenfalls (d) bis (g) in der Komponente (A) zu vereinigen und als Komponente (B) die organischen Polyisocyanate oder modifizierte Polyisocyanatmischungen zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die erhaltenen gegebenenfalls zelligen Formkörper eine Dichte von 250 bis 1400 kg/$m^3$ besitzen, wobei die kompakten Formkörper eine Dichte vorzugsweise von 1000 bis 1400 kg/$m^3$, und insbesondere von 1000 bis 1200 kg/$m^3$, die zelligen und mikrozellularen Formkörper vorzugsweise eine Dichte von 400 bis 1100 kg/$m^3$, z.B. für Schuhsohlen von 450 bis 750 kg/$m^3$, insbesondere von 550 bis 650 kg/$m^3$ und für Verkleidungselemente von 700 bis 1200 kg/$m^3$, insbesondere von 950 bis 1150 kg/$m^3$ aufweisen. Die Ausgangskomponenten werden mit einer Temperatur von 15 bis 80 °C, vorzugsweise von 30 bis 65 °C in das Formwerkzeug eingebracht. Die Formwerkzeugtemperatur beträgt zweckmäßigerweise 20 bis 110 °C, vorzugsweise 35 bis 95 °C und insbesondere 35 bis 75 °C. Die Verdichtungsgrade zur Herstellung der mikrozellularen oder zelligen Formkörper liegen zwischen 1,1 und 8, vorzugsweise zwischen 2 und 6.

Obgleich die erfindungsgemäß hergestellten Elastomer-Formkörper trennfreundlich sind, kann es zur Verbesserung der Entformung vorteilhaft sein, die Formwerkzeuginnenflächen zumindest zu Beginn einer Produktionsreihe mit üblichen äußeren Formtrennmitteln, beispielsweise auf Wachs- oder Silikonbasis oder insbesondere mit wäßrigen Seifenlösungen, zu beschichten. Insbesondere bewährt haben sich jedoch und daher vorzugsweise verwendet werden innere Formtrennmittel, wie sie beispielsweise beschrieben werden in der EP-A-153 639, EP-A-180 749 (AU 85/47 498), EP-A-173 888 (US 4 519 965), WO 84/03288 (EP-A-119 471) und WO 86/01215. Die Formstandzeiten betragen in Abhängigkeit von der Größe und Geometrie des Formteils durchschnittlich 3 bis 60 Sekunden.

Die erfindungsgemäßen N-Benzylharngruppen gebunden enthaltende Elastomere zeichnen sich durch gute mechanische Eigenschaften aus. Derartige Elastomere mit einer Rohdichte nach DIN 53 420 von 800 bis 1400 kg/$m^3$ weisen eine Reißfestigkeit nach DIN 53 504 von 15 bis 55 N/$mm^2$, vorzugsweise von 20 bis 45 N/$mm^2$, eine Reißdehnung nach DIN 53 504 von 15 bis 400 %, vorzugsweise von 60 bis 350 % eine Weiterreißfestigkeit nach DIN 53 515 von 25 bis 140 N/mm, vorzugsweise von 30 bis 120 N/mm, eine Shore-D-Härte nach DIN 53 505 von 40 bis 80, vorzugsweise von 45 bis 75, einen Biege-E-Modul nach DIN 53 457 von 200 bis 2000 und eine Wärmeformbeständigkeit (HDT) nach ISO-75/B (DIN 53 461) von 80 bis 210 °C, vorzugsweise von 90 bis 205 °C auf.

Die nach dem erfindungsgemäßen Verfahren erhältlichen kompakten Formkörper finden insbesondere Verwendung in der Kraftfahrzeug- und Flugzeugindustrie, beispielsweise als Stoßstangenabdeckungen, Rammschutzleisten, Karosserieteile, wie z.B. Regenrinnen, Kotflügel, Spoiler, Radkastenverbreiterungen sowie für andere technische Gehäuseteile und Laufrollen. Die zelligen Formkörper eignen sich für Schuhsohlen, Armlehnen, Kopfstützen, Sonnenblenden, Sicherheitsabdeckungen in Fahrzeugkabinen, sowie als Motorrad-, Traktor- oder Fahrradsattel, Sitzkissen und Deckschichten in Verbundkörpern.

Beispiel 1

a) Herstellung von N,N'-Polyoxypropylen-dibenzylimin.

6000 Gew.-Teile eines Polyoxypropylen-diamins der Struktur

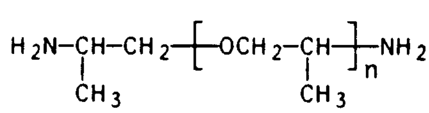

und einem mittleren Molekulargewicht von 2000 wurden in einem 10 Liter Dreihalskolben, ausgerüstet mit Rührer, Tropftrichter und Destilliervorrichtung auf 50 °C temperiert. Unter intensivem Rührers ließ man hierzu

1300 Gew.-Teile einer Lösung, die bestand aus

650 Gew.-Teilen Benzaldehyd in

650 Gew.-Teilen Cyclohexan

innerhalb einer Stunde zutropfen und rührte noch 15 Minuten bei 50 °C nach.

Die flüchtigen Bestandteile der Reaktionsmischung wurden nun bei einer Sumpftemperatur bis 100 °C zuerst bei Normaldruck und anschließend unter stetiger Druckreduzierung bis auf 2 bis 3 mbar abgetrennt. Man erhielt als Rückstand 6500 Gew.-Teile N,N'-Polyoxypropylen-dibenzylimin, das ohne weitere Reinigung hydriert wurde.

b) Herstellung von N,N'-Dibenzylpolyoxypropylen-diamin.

In einem 10 Liter Autoklav wurden 6000 Gew.-Teile des nach Beispiel 1a hergestellten N,N'-Polyoxypropylen-dibenylimins in Gegenwart von 250 Gew.-Teilen Raney-Nickel, das zuvor mit Methanol und Cyclohexan gewaschen worden war, mit Wasserstoff bei einer Temperatur von 130 °C und unter einem Druck von 200 bar über einen Zeitraum von 20 Stunden hydriert. Nach der Entspannung des Autoklavs wurde die Reaktionsmischung unter Druck filtriert und anschließend die flüchtigen Bestandteile abgetrennt bei 5 mbar und einer maximalen Sumpftemperatur von 150 °C.

Man erhielt in praktisch quantitativer Ausbeute N,N'-Dibenzyl-polyoxypropylen-diamin.

Beispiel 2

a) Herstellung von N,N',N''-Polyoxypropylen-tribenzylimin

6000 Gew.-Teile eines Polyoxypropylen-triamins der Struktur

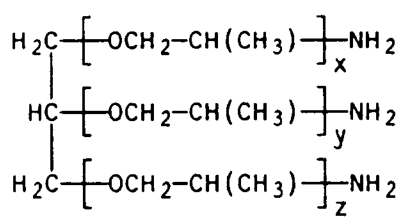

und einem mittleren Molekulargewicht von 3000 wurden analog den Angaben des Beispiels 1a mit 1300 Gew.-Teilen einer Lösung, die bestand aus

650 Gew.-Teilen frisch destilliertem Benzaldehyd und
650 Gew.-Teilen Cyclohexan

zur Reaktion gebracht.

Man erhielt als Rückstand 6800 Gew.-Teile N,N',N''-Polyoxypropylen-tribenzylimin, das ohne weitere Reinigung hydriert wurde.

b) Herstellung von N,N',N''-Tribenzyl-polyoxypropylen-triamin

6800 Gew.-Teile des nach Beispiel 2a hergestellten N,N',N''-Polyoxypropylen-tribenzylimins wurden analog den Angaben des Beispiels 1b hydriert.

Man erhielt in praktisch quantitativer Ausbeute N,N',N''-Tribenzyl-polyoxypropylen-triamin.

Herstellung von N-Benzylharnstoffgruppen enthaltenden Elastomeren.

Beispiel 3

A-Komponente:

Mischung aus

38,75 Gew.-Teilen N,N'-Dibenzyl-polyoxypropylen-diamin, hergestellt nach den Angaben der Beispiele 1a und 1b,

30,0 Gew.-Teilen einer Mischung aus 1-Methyl-3,5-diethyl-phenylendiamin-2,4 und 1-Methyl-3,5-diethyl-phenylendiamin-2,6 im Gewichtsverhältnis 80 : 20, und

31,25 Gew.-Teilen Polyoxypropylen-diamin mit einem mittleren Molekulargewicht von 2000 und mindestens 91 Gew. -% primären Aminogruppen (Jeffamine® D2000 der Texaco)

B-Komponente:

NCO-Gruppen enthaltenes Prepolymer mit einem NCO-Gehalt von 20 Gew.-%, hergestellt durch Umsetzung eines Carbodiimidgruppen enthaltenden 4,4'-Diphenylmethan-diisocyanates mit einem NCO-Gehalt von 29,5 Gew.-% und eines mit Dipropylenglykol gestarteten Polyoxypropylen-diol mit einer Hydroxylzahl von 56.

Die Komponenten A und B wurden im Mischungsverhältnis A : B = 100 : 96,4 Gew.-Teilen, auf einer Hochdruckdosieranlage vom Typ Puromat®30 der Elastogran Polyurethane GmbH, Geschäftsbereich Maschinenbau, gemischt und in ein auf 90 °C temperiertes metallisches Formwerkzeug mit den Innenabmessungen 400 x 200 x 4 mm eingespritzt. Die Temperatur der A-Komponente betrug 65 °C und die der B-Komponente 50 °C.

Der Fließweg der Reaktionsmischung betrug bei einer Temperatur von 90 °C 221 cm, gemessen anhand eines S-förmigen Fließkanals mit einem Durchmesser von 10 mm bei einer Austragsleistung von 300 g/sec und einer Schußzeit von 1 sec. Die Formplatte besaß nach 40 sec. eine Shore-D-Härte von 47.

An dem eine Stunde bei 160 °C getemperten Formteil wurden folgende mechanische Daten gemessen:

| | | |
|---|---|---|
| Rohdichte | DIN 53420 [kg/m$^3$] | 1108 |
| Reißfestigkeit | DIN 53504 [N/mm$^2$] | 36 |
| Reißdehnung | DIN 53504 [%] | 176 |
| Weiterreißfestigkeit | DIN 53515 [N/mm$^2$] | 33 |
| Härte | DIN 53505 [Shore D] | 74 |
| Biege-E-Modul | DIN 53457 [N/mm$^2$] | 590 |
| Wärmeformbeständigkeit (HDT) nach ISO-75/B | DIN 53461 [°C] | 175 |

Vergleichsbeispiele I bis III

Man verfuhr analog den Angaben von Beispiel 3, verwendete jedoch anstelle von N,N'-Dibenzyl-polyoxypropylen-diamin die folgenden gegebenenfalls N-alkylsubstituierten Polyoxypropylen-diamine in folgenden Mischungsverhältnissen der Komponenten A : B.

| Vergleichsbeispiel | Polyoxypropylen-diamin | Mischungsverhältnis der Komponenten A : B [Gew.-Teile] |
|---|---|---|
| I | N,N'-Dibutyl-polyoxypropylen-diamin (Molekulargew. ca. 2100) | 100 : 96,2 |
| II | N,N'-Dicyclopentyl-polyoxypropylen-diamin (Molekulargew. ca. 2100) | 100 : 96,7 |
| III | Polyoxypropylen-diamin (Jeffamine® D2000) | 100 : 97,2 |

Die Reaktionsmischungen zeigten folgendes Fließverhalten, gemessen bei einer Temperatur von 90 °C nach der oben beschriebenen Methode. Zur Bestimmung des Durchzugsverhalten wurde die Shore-D-Härte nach 40 sec. ermittelt.

| Vergleichsbeispiel | Fließweg [cm] | Härte Shore D nach 40 sec. |
|---|---|---|
| I | 195 | 53 |
| II | 190 | 51 |
| III | 174 | 54 |

An den eine Stunde bei 160°C getemperten Formteilen wurden folgende mechanische Eigenschaften gemessen

| Vergleichsbeispiele | | | I | II | III |
|---|---|---|---|---|---|
| Rohdichte | DIN 53420 | [$kg/m^3$] | 1104 | 1109 | 1106 |
| Reißfestigkeit | DIN 53504 | [$N/mm^2$] | 34 | 34 | 36 |
| Reißdehnung | DIN 53504 | [%] | 153 | 153 | 155 |
| Weiterreißfestigkeit | DIN 53515 | [$N/mm^2$] | 30 | 31 | 33 |
| Härte | DIN 53505 | [Shore D] | 71 | 71 | 74 |
| Biege-E-Modul | DIN 53457 | [$N/mm^2$] | 615 | 653 | 652 |
| Wärmeformbeständigkeit (HDT) nach ISO-75/B | DIN 53461 | [°C] | 170 | 169 | 180 |

## Patentansprüche

1. Verfahren zur Herstellung von elastischen Formkörpern auf der Grundlage von N-Benzylharnstoffgruppen gebunden enthaltenden Elastomeren durch Umsetzung von

a) mindestens einem organischen und/oder modifizierten organischen Polyisocyanat
mit
b) mindestens einem sekundären Polyoxyalkylen-polyamin und
c) mindestens einem alkylsubstituierten. primären aromatischett Diamin mit einem Molekulargewicht bis 500
in Gegenwart oder Abwesenheit von
d) Katalysatoren,
dadurch gekennzeichnet, daß man als sekundäre Polyoxyalkylen-polyamine (b) N-Benzyl-polyoxyalkylen-polyamine (bi) gegebenenfalls in Mischung mit Polyoxyalkylen-polyamine mit 2 bis 4 primären Aminogruppen (bii) verwendet.

**2.** Verfahren nach Anspruch 1, dadurch gekennzeichnet, daß man als sekundäre Polyoxyalkylen-polyamine (b) N,N'-Dibenzyl-polyoxyalkylen-diamine,N,N',N''-Tribenzyl-polyoxyalkylen-triamine oder Mischungen dieser N-benzylsubstituierten Polyoxyalkylen-di- und -triamine verwendet.

**3.** Verfahren nach einem der Ansprüche 1 oder 2, dadurch gekennzeichnet, daß die N-Benzyl-polyoxyalkylen-polyamine Molekulargewichte von 410 bis 8000 besitzen.

**4.** Verfahren nach einem der Ansprüche 1 bis 3, dadurch gekennzeichnet, daß man als sekundäre Polyoxyalkylen-polyamine (b) Mischungen verwendet aus
bi) N-Benzyl-polyoxyalkylen-polyaminen und
bii) Polyoxyalkylen-polyaminen mit 2 bis 4 primären Aminogruppen und einem Molekulargewicht von 1100 bis 8000.

**5.** Verfahren nach einem der Ansprüche 1 bis 4, dadurch gekennzeichnet, daß man als sekundäre Polyoxyalkylen-polyamine (b) Mischungen verwendet, die enthalten
10 bis 90 % N-Benzylaminogruppen der N-Benzyl-polyoxyalkylen-polyamine und
90 bis 10 % primäre Aminogruppen der Polyoxyalkylen-polyamine mit 2 bis 4 primären Aminogruppen und einem Molekulargewicht von 1100 bis 8000, wobei die Prozente bezogen sind auf die Summe aus N-Benzylamino- und primären Aminogruppen.

**6.** Verfahren nach einem der Ansprüche 1 bis 5, dadurch gekennzeichnet, daß man die elastischen Formkörper nach dem one shot-Verfahren mit Hilfe der RIM-Technik in einem geschlossenen Formwerkzeug herstellt.

**7.** Verfahren zur Herstellung von elastischen, zelligen Formkörpern nach einem der Ansprüche 1 bis 5, dadurch gekennzeichnet, daß man die Umsetzung in Gegenwart von
e) Treibmitteln
nach der RIM-Technik und unter Verdichtung in einem geschlossenen Formwerkzeug durchführt.

**8.** Verfahren nach einem der Ansprüche 1 bis 7, dadurch gekennzeichnet, daß zur Herstellung der elastischen, kompakten oder zelligen Formkörper auf der Grundlage von N-Benzylharnstoffgruppen gebunden enthaltenden Elastomeren zusätzlich
f) Hilfsmittel und/oder
g) Zusatzstoffe, ausgewählt aus der Gruppe der oberflächenaktiver. Substanzen, Schaumstabilisatoren, Zellregler, Füllstoffe, Verstärkungsmittel, Flammschutzmittel, äußeren und/oder inneren Trennmittel, Farbstoffe, Pigmente, Hydrolyseschutzmittel, fungistatisch und bakteriostatisch wirkenden Substanzen
mitverwendet werden.

**9.** Verfahren nach einem der Ansprüche 1 bis 8, dadurch gekennzeichnet, daß man als modifizierte organische Polyisocyanate (a) Polyisocyanatmischungen mit einem NCO-Gehalt von 8 bis 33,6 Gew.-% verwendet, die enthalten:
ai) Carbodiimid- und/oder Urethangruppen enthaltende Polyisocyanate aus 4,4'-Diphenylmethandiisocyanat oder einer Mischung aus 4,4'- und 2,4'-Diphenylmethan-diisocyanaten mit einem NCO-Gehalt von 8 bis 33,6 Gew.-% und/oder
aii) ein NCO-Gruppen enthaltendes Prepolymer mit einem NCO-Gehalt von 8 bis 25 Gew.-%, bezogen auf das Prepolymergewicht, hergestellt durch Umsetzung von Polyoxyalkylen-polyolen mit

einer Funktionalität von 2 bis 4 und einem Molekulargewicht von 600 bis 6000 mit 4,4'-Diphenylmethan-diisocyanat oder einer Mischung aus 4,4'- und 2,4'-Diphenylmethan-diisocyanaten.

**10.** Verfahren nach einem der Ansprüche 1 bis 9, dadurch gekennzeichnet, daß man als alkylsubstituierte aromatische Polyamine (c) aromatische Diamine verwendet, die mindestens einen Alkylsubstituenten in ortho-Stellung zu jeder Aminogruppe gebunden enthalten und ausgewählt sind aus der Gruppe von 1,3,5-Triethyl-2,4-phenylen-diamin, 1-Methyl-3,5-diethyl-2,4- und/oder -2,6-phenylendiamin, 3,3'-Dialkyl-4,4'-diamino-diphenylmethane mit 1 bis 4 C-Atomen im Alkylrest und 3,3',5,5'-Tetraalkyl-4,4'-diamino-diphenylmethane mit 1 bis 4 C-Atomen im Alkylrest oder Mischungen aus mindestens zwei der genannten alkylsubstituierten aromatischen Diamine.

**11.** Verfahren nach einem der Ansprüche 1 bis 10, dadurch gekennzeichnet, daß man die N-Benzyl-polyoxyalkylen-poiyamine (bi) oder Mischungen aus N-Benzyl-polyoxyalkylen-polyaminen (bi) und Polyoxyalkylen-polyaminen mit 2 bis 4 primären Aminogruppen (bii) und alkylsubstituierten aromatischen Polyamine (c) in solchen Mengen verwendet, daß das Verhältnis von sekundären Aminogruppen oder von sekundären und primären Aminogruppen der Aufbaukomponente (b) zu primären aromatischen Aminogruppen der Aufbaukomponente (c) 90 : 10 bis 10 : 90 beträgt.

**12.** N,N'-Dibenzyl-polyoxyalkylen-diamine mit einem Molekulargewicht von 410 bis 8000 und einem Polyoxyalkylenrest, ausgewählt aus der Gruppe der Polyoxyethylen-, Polyoxypropylen-, Polyoxytetramethylen-, Polyoxypropylen-polyoxyethylen-, Polyoxytetramethylen-polyoxypropylen- und/oder -polyoxyethylenreste.

**13.** N,N',N''-Tribenzyl-polyoxyalkylen-triamine mit einem Molekulargewicht von 662 bis 8000 und einem Polyoxyalkylenrest, ausgewählt aus der Gruppe der Polyoxyethylen-, Polyoxypropylen-, Polyoxytetramethylen-, Polyoxypropylen-polyoxyethylen-, Polyoxytetramethylen-polyoxypropylen- und/oder polyoxyethylenreste.

**14.** Polyoxyalkylen-polyamin-Mischungen, die enthalten
10 bis 90 % Benzylaminogruppen von N,N'-Dibenzyl-polyoxyalkylen-diaminen, N,N',N''-Tribenzyl-polyoxyalkylen-triaminen oder Mischungen dieser N-Benzyl-polyoxyalkylen-polyamine mit Molekulargewichten von 410 bis 8000 und
10 bis 90 % primären Aminogruppen von mindestens einem Polyoxyalkylen-polyamin mit 2 und/oder 3 primären Aminogruppen und einem Molekulargewicht von 1100 bis 8000, wobei die Polyoxyalkylenreste ausgewählt sind aus der Gruppe der Polyoxypropylen-polyoxyethylen-, Polyoxytetramethylen- und vorzugsweise Polyoxypropylenreste und die Prozente bezogen sind auf die Summe aus N-Benzylamino- und primären Aminogruppen.

**15.** N-Benzylharnstoffgruppen gebunden enthaltende Elastomere, hergestellt durch Umsetzung von
a) mindestens einem organischen und/oder modifizierten organischen Polyisocyanat mit
b) mindestens einem N-Benzyl-polyoxyalkylen-polyamin oder einer Mischung aus mindestens einem N-Benzyl-polyoxyalkylen-polyamin und mindestens einem polyoxyalkylen-polyamin mit 2 bis 4 primären Aminogruppen und
c) mindestens einem alkylsubstituierten primären aromatischer. Diamin mit einem Molekulargewicht bis 500 in Gegenwart oder Abwesenheit von
d) Katalysatoren.

## Claims

**1.** A process for the production of elastic moldings based on elastomers containing N-benzylurea groups in bound form, by reacting
a) one or more organic and/or modified organic polyisocyanates
with
b) one or more secondary polyoxyalkylene-polyamines and
c) one or more alkyl-substituted primary aromatic diamines having a molecular weight of up to 500,
in the presence or absence of
d) catalysts,
wherein the secondary polyoxyalkylene-polyamine (b) used is an N-benzylpolyoxyalkylene-polymaine

(bi), if desired as a mixture with a polyoxyalkylene-polyamine containing from 2 to 4 primary amino groups (bii)

**2.** A process as claimed in claim 1, wherein the secondary polyoxyalkylene-polyamine (b) used is an N,N'-dibenzylpolyoxyalkylenediamine, an N,N',N''-tribenzylpolyoxyalkylenetriamine or a mixture of these N-benzyl-substituted polyoxyalkylene-diamines and -triamines.

**3.** A process as claimed in claim 1 or 2, wherein the N-benzylpolyoxyalkylene-polyamine has a molecular weight of from 410 to 8,000.

**4.** A process as claimed in claim 1 or 2 or 3, wherein the secondary polyoxyalkylene-polyamine (b) used is a mixture of
bi) an N-benzylpolyoxyalkylene-polyamine and
bii) a polyoxyalkylene-polyamine containing from 2 to 4 primary amino groups and having a molecular weight of from 1,100 to 8,000.

**5.** A process as claimed in claim 1 or 2 or 3 or 4, wherein the secondary polyoxyalkylene-polyamine (b) used is a mixture which contains
from 10 to 90% of N-benzylamino groups of the N-benzylpolyoxyalkylene-polyamineand
from 90 to 10% of primary amino groups of the polyoxyalkylene-polyamine containing from 2 to 4 primary amino groups and having a molecular weight of from 1,100 to 8,000, the percentages being based on the sum of N-benzylamino groups and primary amino groups.

**6.** A process as claimed in claim 1 or 2 or 3 or 4 or 5, wherein the elastic moldings are produced by the one-shot process using the RIM technique in a closed mold.

**7.** A process for the production of elastic, cellular moldings as claimed in claim 1 or 2 or 3 or 4 or 5, wherein the reaction is carried out in the presence of
e) blowing agents
by the RIM technique and with compaction in a closed mold.

**8.** A process as claimed in claim 1 or 2 or 3 or 4 or 5 or 6 or 7, wherein the production of the elastic, compact or cellular moldings based on elastomers containing N-benzylurea groups in bound form is carried out in the additional presence of
f) auxiliaries and/or
g) additives selected from the group comprising surface-active substances, foam stabilizers, cell regulators, fillers, reinforcing agents, flame-proofing agents, external and/or internal release agents, dyes, pigments, hydrolysis-protection agents, and fungistatic and bacteriostatic substances.

**9.** A process as claimed in claim 1 or 2 or 3 or 4 or 5 or 6 or 7 or 8, wherein the modified organic polyisocyanate (a) used is a polyisocyanate mixture having an NCO content of from 8 to 33.6% by-weight and containing:
ai) a carbodiimide- and/or urethane-containing polyisocyanate made from 4,4'-diphenylmethane diisocyanate or from a mixture of 4,4'- and 2,4'-diphenylmethane diisocyanate and having an NCO content of from 8 to 33.6% by weight, and/or
aii) an NCO-containing prepolymer having an NCO content of from 8 to 25% by weight, based on the prepolymer weight, and prepared by reacting a polyoxyalkylene-polyol having a functionality of from 2 to 4 and a molecular weight of from 600 to 6,000 with 4,4'-diphenylmethane diisocyanate or a mixture of 4,4'-and 2,4'-diphenylmethane diisocyanates.

**10.** A process as claimed in claim 1 or 2 or 3 or 4 or 5 or 6 or 7 or 8 or 9, wherein the alkyl-substituted aromatic polyamine (c) used is an aromatic diamine which contains one or more alkyl substituents bound in the ortho-position to each amino group and is selected from the group comprising 1,3,5-triethyl-2,4-phenylenediamine, 1-methyl-3,5-diethyl-2,4- and/or -2,6-phenylenediamine, 3,3'-dialkyl-4,4'-diaminodiphenylmethanes having from 1 to 4 carbon atoms in the alkyl, and 3,3',5,5'-tetraalkyl-4,4'-diaminodiphenylmethanes having from 1 to 4 carbon atoms in the alkyl, or mixtures of two or more of the alkyl-substituted aromatic diamines mentioned.

11. A process as claimed in claim 1 or 2 or 3 or 4 or 5 or 6 or 7 or 8 or 9 or 10, wherein the N-benzylpolyoxyalkylene-polyamine (bi) or the mixture of N-benzylpolyoxyalkylene-polyamines (bi) and polyoxyalkylene-polyamines containing from 2 to 4 primary amino groups (bii) and alkyl-substituted aromatic polyamines (c) is used in such an amount that the ratio between secondary amino groups or between secondary and primary amino groups in synthesis component (b) and primary aromatic amino groups in synthesis component (c) is from 90 : 10 to 10 : 90.

12. An N,N'-dibenzylpolyoxyalkylenediamine having a molecular weight of from 410 to 8,000 and containing a polyoxyalkylene radical selected from the group comprising polyoxyethylene, polyoxypropylene, polyoxytetramethylene, polyoxypropylene-polyoxyethylene, polyoxytetramethylene-polyoxypropylene and/or polyoxyethylene radicals.

13. An N,N',N''-tribenzylpolyoxyalkylenetriamine having a molecular weight of from 662 to 8,000 and containing a polyoxyalkylene radical selected from the group comprising polyoxyethylene, polyoxypropylene, polyoxytetramethylene, polyoxypropylene-polyoxyethylene, polyoxytetramethylene-polyoxypropylene and/or -polyoxyethylene radicals.

14. A polyoxyalkylene-polyamine mixture which contains
from 10 to 90% of benzylamino groups from N,N'-dibenzylpolyoxyalkylenediamines, N,N',N''-tribenzylpolyoxyalkylenetriamines or mixtures of these N-benzylpolyoxyalkylene-polyamines having molecular weights of from 410 to 8,000, and
from 10 to 90% of primary amino groups from one or more polyoxyalkylene-polyamines containing 2 and/or 3 primary amino groups and having a molecular weight of from 1,100 to 8,000, the polyoxyalkylene radicals being selected from the group comprising polyoxypropylene-polyoxyethylene, polyoxytetramethylene and preferably polyoxypropylene radicals, and the percentages being based on the sum of N-benzylamino groups and primary amino groups.

15. An elastomer containing N-benzylurea groups in bound form and prepared by reacting
a) one or more organic and/or modified organic polyisocyanates with
b) one or more N-benzylpolyoxyalkylene-polyamines or a mixture of one or more N-benzylpolyoxyalkylene-polyamines and one or more polyoxyalkylene-polyamines containing from 2 to 4 primary amino groups and
c) one or more alkyl-substituted primary aromatic diamines having a molecular weight of up to 500,
in the presence or absence of
d) catalysts.

## Revendications

1. Procédé pour la préparation de pièces moulées élastiques à base d'élastomères contenant des groupes N-benzylurée liés, par réaction de
a) au moins un polyisocyanate organique et/ou organique modifié
avec
b) au moins une polyoxyalkylène-polyamine secondaire et
c) au moins une diamine aromatique primaire alkylsubstituée ayant une masse moléculaire allant jusqu'à 500
en présence ou en l'absence de
d) catalyseurs,
caractérisé en ce qu'on utilise comme polyoxyalkylène-polyamines secondaires (b) des N-benzylpolyoxyalkylène-polyamines (bi), éventuellement en mélange avec des polyoxyalkylène-polyamines ayant 2 à 4 groupes amino primaires (bii).

2. Procédé selon la revendication 1, caractérisé en ce qu'on utilise comme polyoxyalkylène-polyamines secondaires (b) des N,N'-dibenzyl-polyoxyalkylène-diamines, des N,N',N''-tribenzyl-polyoxyalkylène-triamines ou des mélanges de ces polyoxyalkylène-di- et -triamines N-benzylsubstituées.

3. Procédé selon l'une des revendications 1 ou 2, caractérisé en ce que les N-benzyl-polyoxyalkylène-polyamines possèdent des masses moléculaires de 410 à 8000.

**4.** Procédé selon l'une quelconque des revendications 1 à 3, caractérisé en ce qu'on utilise comme polyoxyalkylène-polyamines secondaires (b) des mélanges de
bi) N-benzyl-polyoxyalkylène-polyamines et
bii) polyoxyalkylène-polyamines ayant 2 à 4 groupes amino primaires et une masse moléculaire de 1100 à 8000.

**5.** Procédé selon l'une quelconque des revendications 1 à 4, caractérisé en ce qu'on utilise comme polyoxyalkylène-polyamines secondaires (b) des mélanges contenant
10 à 90 % de groupes N-benzylamino des N-benzyl-polyoxyalkylène-polyamines et
90 à 10 % de groupes amino primaires des polyoxyalkylène-polyamines ayant 2 à 4 groupes amino primaires et une masse moléculaire de 1100 à 8000, les pourcentages se rapportant à la somme des groupes N-benzylamino et amino primaires.

**6.** Procédé selon l'une quelconque des revendications 1 à 5, caractérisé en ce qu'on prépare les pièces moulées élastiques selon le procédé en une fois au moyen de la technique de moulage réactif par injection (RIM) dans un moule fermé.

**7.** Procédé pour la préparation de pièces moulées élastiques cellulaires selon l'une quelconque des revendications 1 à 5, caractérisé en ce qu'on effectue la réaction en présence
e) d'agents gonflants,
selon la technique RIM et sous compression dans un moule fermé.

**8.** Procédé selon l'une quelconque des revendications 1 à 7, caractérisé en ce que, pour la préparation des pièces moulées élastiques, compactes ou cellulaires, à base d'élastomères contenant des groupes N-benzylurée liés, on utilise en outre conjointement
f) des adjuvants et/ou
g) des additifs, choisis dans le groupe des agents tension-actifs, des stabilisateurs de mousse, des régulateurs de pores, des charges, des agents renforçateurs, des agents ignifugeants, des agents de démoulage externes et/ou internes, des colorants, des pigments, des agents protecteurs d'hydroxyle, des substances à activité fongistatique et bactériostatique.

**9.** Procédé selon l'une quelconque des revendications 1 à 8, caractérisé en ce qu'on utilise, comme polyisocyanates organiques modifiés (a), des mélanges de polyisocyanates ayant une teneur en NCO de 8 à 33,6 % en poids, contenant:
ai) des polyisocyanates contenant des groupes carbodiimide et/ou uréthanne provenant de 4,4'-diphénylméthane-diisocyanate ou d'un mélange de 4,4'- et 2,4'-diphénylméthane-diisocyanates ayant une teneur en NCO de 8 à 33,6 % en poids et/ou
aii) un prépolymère contenant des groupes NCO ayant une teneur en NCO de 8 à 25 % en poids, par rapport au poids de prépolymère, préparé par réaction de polyoxyalkylène-polyols ayant une fonctionnalité de 2 à 4 et une masse moléculaire de 600 à 6000 avec du 4,4'-diphénylméthane-diisocyanate ou un mélange de 4,4'- et 2,4'-diphénylméthane-diisocyanates

**10.** Procédé selon l'une quelconque des revendications 1 à 9, caractérisé en ce qu'on utilise, comme polyamines aromatiques alkylsubstituées (c), des diamines aromatiques qui contiennent au moins un substituant alkyle fixé en position ortho de chaque groupe amino, et sont choisies dans le groupe comprenant la 1,3,5-triéthyl-2,4-phénylènediamine, la 1-méthyl-3,5-diéthyl-2,4- et/ou -2,6-phénylènediamine, le 3,3'-dialkyl-4,4'-diamino-diphénylméthane ayant 1 à 4 atomes de carbone dans le reste alkyle et le 3,3',5,5'-tétraalkyl-4,4'-diamino-diphénylméthane ayant 1 à 4 atomes de carbone dans le reste alkyle ou des mélanges d'au moins deux des diamines aromatiques alkylsubstituées mentionnées.

**11.** Procédé selon l'une quelconque des revendications 1 à 10, caractérisé en ce qu'on utilise les N-benzyl-polyoxyalkylène-polyamines (bi) ou des mélanges de N-benzyl-polyoxyalkylène-polyamines (bi) et de polyoxyalkylène-polyamines ayant 2 à 4 groupes amino primaires (bii) et des polyamines aromatiques alkylsubstituées (c) en des quantités telles que le rapport entre les groupes amino secondaires ou entre les groupes amino secondaires et primaires des composants structurels (b) et les groupes amino aromatiques primaires des composants structurels (c) soit de 90 : 10 à 10 : 90.

**12.** N,N'-dibenzyl-polyoxyalkylène-diamines ayant une masse moléculaire de 410 à 8000 et un reste polyoxyalkylène, choisi dans le groupe des restes polyoxyéthylène, polyoxypropylène, polyoxytétraméthylène, polyoxypropylène-polyoxyéthylène, polyoxytétraméthylène-polyoxypropylène et/ou polyoxyéthylène.

**13.** N,N',N''-tribenzyl-polyoxyalkylène-triamines ayant une masse moléculaire de 662 à 8000 et un reste polyoxyalkylène, choisi dans le groupe des restes polyoxyéthylène, polyoxypropylène, polyoxytétraméthylène, polyoxypropylène-polyoxyéthylène, polyoxytétraméthylène-polyoxypropylène et/ou polyoxyéthylène.

**14.** Mélanges de polyoxyalkylène-polyamine, contenant 10 à 90 % de groupes benzylamino de N,N'-dibenzyl-polyoxyalkylène-diamines, N,N',N''-tribenzyl-polyoxyalkylène-triamines ou de mélanges de ces N-benzyl-polyoxyalkylène-polyamines ayant des masses moléculaires de 410 à 8000 et
10 à 90 % de groupes amino primaires d'au moins une polyoxyalkylène-polyamine ayant 2 et/ou 3 groupes amino primaires et une masse moléculaire de 1100 à 8000, tandis que les restes polyoxyalkylène sont choisis dans le groupe des restes polyoxypropylène-polyoxyéthylène, polyoxytétraméthylène et avantageusement polyoxypropylène et les pourcentages se rapportent à la somme des groupes N-benzylamino et amino primaire.

**15.** Elastomères contenant des groupes N-benzylurée liés, préparés par réaction de
a) au moins un polyisocyanate organique et/ou organique modifié
avec
b) au moins une N-benzyl-polyoxyalkylène-polyamine ou un mélange d'au moins une N-benzyl-polyoxyalkylène-polyamine et d'au moins une polyoxyalkylène-polyamine ayant 2 à 4 groupes amino primaires et
c) au moins une diamine aromatique primaire alkylsubstituée ayant une masse moléculaire allant jusqu'à 500
en présence ou en l'absence de
d) catalyseurs.